(19) Europäisches Patentamt
European Patent Office
Office européen des brevets

(11) **EP 2 402 398 B1**

(12) **EUROPÄISCHE PATENTSCHRIFT**

(45) Veröffentlichungstag und Bekanntmachung des Hinweises auf die Patenterteilung:
**01.01.2014 Patentblatt 2014/01**

(51) Int Cl.:
***C08L 83/04*** *(2006.01)*

(21) Anmeldenummer: **11171583.5**

(22) Anmeldetag: **27.06.2011**

(54) **Lagerstabile Härterzusammensetzung im 2K System**

Storage-stable hardener composition in a 2K system

Composition durcissante stable en stockage dans le système 2K

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.07.2010 DE 102010030842**

(43) Veröffentlichungstag der Anmeldung:
**04.01.2012 Patentblatt 2012/01**

(73) Patentinhaber: **Wacker Chemie AG**
**81737 München (DE)**

(72) Erfinder: **Sixt, Torsten, Dr.**
**84561 Mehring (DE)**

(74) Vertreter: **Mieskes, Klaus Theoderich et al**
**Wacker Chemie AG**
**Intellectual Property**
**Hanns-Seidel-Platz 4**
**81737 München (DE)**

(56) Entgegenhaltungen:
**US-B1- 6 255 373    US-B2- 6 521 699**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Zweikomponentige (2K) Silikonzusammensetzungen sind im Stand der Technik schon länger bekannt und werden oft als Klebe- und Dichstoffe in diversen Applikationen eingesetzt. Bei Raumtemperatur vernetzende zweikomponenteige Silicone werden als "room temperature vulcanizing 2 part silicones" (RTV-2) bezeichnet. Eine der beiden Komponenten wird häufig als Polymerzusammensetzung oder als A-Komponente bezeichnet.

Die zweite Komponente wird häufig Härterzusammensetzung oder auch als B-Komponente genannt.

Der hier verwendete Begriff Separation beschreibt eine selbstständige Abtrennung von Komponenten in einem Stoffgemisch oder Zubereitung durch unzureichende Verträglichkeit oder unterschiedliche Dichte der der Einzelkomponenten. Entsprechend der Dichte der separierenden Komponente(n) sind meist entweder Ansammlungen an der Oberfläche oder am Boden beobachtbar.

Dieses Merkmal kann auch mit Hilfe des Begriffs der Homogenität, also der stofflichen Einheitlichkeit, beschrieben werden. Inhomogen sind demzufolge Mischungen oder Zubereitungen, bei denen sich eine vom Großteil der Masse unterscheidende Phase ausbildet. Dies kann beispielsweise die Separation einer öligen oder flüssigen Komponente auf einer Paste sein. Bei flüssigen Stoffgemischen kann es sich um die sichtbare Ausbildung einer Phasengrenze zwischen unlöslichen oder unverträglichen Komponenten handeln.

Im heutigen Stand der Technik haben selbsthaftende Härterzusammensetzungen oft Siliconpolymere als Extenderpolymer. Diese sind meist Vinyl- oder Trimethylsilylfunktionelle Polydimethylsiloxane. Die Verträglichkeit von beispielsweise Vernetzern oder Haftvermittlern mit diesem Polymer sind nicht immer hinreichend gut, so dass das Risiko der Phasenseparation besteht. Zumeist werden solche Härterzusammensetzungen rheologisch stabilisiert, das heißt mit rheologisch aktiven Füllstoffen eine standfeste Paste formuliert, um eine allzu leichte Entmischung zu verhindern. Langfristig jedoch ist dies nicht zielführend.

Separation einer flüssigen Phase an der Oberfläche ist bei vielen Härterzusammensetzungen hinreichend bekannt.

Da in anwendungsfertigen, selbsthaftenden Zusammensetzungen üblicherweise Haftvermittlermengen von etwa 1% und Vernetzer in Mengen von ca. 3-5% benötigt werden, enthalten beispielsweise 2K-Syteme für ein 9:1-Mischungsverhältnis von A- und B-Komponente entsprechend etwa 10-fache Konzentrationen in der Härterzusammensetzungen, was über der Löslichkeitsgrenze mancher Haftvermittler liegt. Damit kommt das Problem der Phasenseparation einzelner Komponenten erst recht zum Tragen.

In WO 2010/057963 A1 wird eine B-Komponente offenbart, die vinylterminiertes Polydimethylsiloxan und zur rheologischen Stabilisierung beispielsweise Russ und Kieselsäure und darüberhinaus Vernetzer und Haftvermittler enthalten kann. Diese zusätzliche rheologische Stabilisierung zögert jedoch nur den Zeitpunkt der Separation von Bestandteilen der Härterzusammensetzung lediglich hinaus.

In US 2010/081751 A1 werden RTV-2 Zusammensetzungen beschrieben, bei denen die Vernetzer-Komponente ein lineares, nichtreaktives Polydimethylsiloxan oder Copolymer enthalten kann. Auch hier wird die Separation der Härterzusammensetzung nur herausgezögert.

In DE 32 06 474 A1 werden die Bestandteile der B-Komponente, Alkylsilikat, Katalysator und Haftvermittler in einer vorherigen Reaktion umgesetzt, um die Verträglichkeit der Komponenten zu erreichen. Dies hat den Nachteil, dass ein aufwändiger, zusätzlicher, chemischer Prozess durchgeführt werden muß.

Aufgabe der vorliegenden Erfindung war daher die Bereitsstellung von Härterzusammensetzungen für 2K-Siliconzusammensetzungen, die bei Lagerung homogen beleiben und keine Separation zeigen, ohne dass sie vorher in einem zusätzlichen Prozessschritt aufwändig chemisch umgesetzt oder rheologisch stabilisiert wurden.

Diese Aufgabe wurde gelöst durch die erfindungsgemäße Härterzusammensetzung für Kondensationsvernetzende RTV-2-Siliconzusammensetzungen enthaltend

(A) Mindestens einen Vernetzer,
(B) Mindestens einen Katalysator,
(C) mindestens ein Extenderpolymer dadurch gekennzeichnet, dass die Summe der molaren Anteile von T- und Q-Einheiten in (C) mindestens 25% beträgt.

Die erfindungsgemäße Härterzusammensetzung wird in RTV-2-Sytemen zusammen mit einer Polymerzusammensetzung als zweite Komponente eingesetzt. Solche Polymerzusammensetzungen für RTV-2-Systeme sind dem Fachmann seit langem bekannt. Sie enthalten üblicherweise hydroxyterminierte Polydimethylsiloxane als vernetzungsfähiges Polymere, meist trimethylsilyl-terminierte Polydimethylsiloxane als Weichmacherkomponente, des Weiteren verstärkende oder nichtverstärkende Füllstoffe wie beispielsweise Kieselsäure, Ruß, Quarz, Kreide, Diatomeenerde etc. Optionale Komponenten wie Hitzestabilisatoren, Additive zur Optimierung von Rheologie oder speziellen Eigenschaften, Fungizide werden darüber hinaus eingesetzt.

Bei den erfindungsgemäß eingesetzten Vernetzern (A) handelt es sich vorzugsweise um Organosiliciumverbindungen der allgemeinen Formel (I)

$$Z_c SiR^2{}_{(4-c)} \qquad\qquad\qquad (I),$$

wobei

$R^2$ unabhängig voneinander gleich oder verschieden sein kann und einwertige, gegebenenfalls substituierte Kohlenwasserstoffreste, die durch Sauerstoffatome unterbrochen sein können, bedeutet,

Z unabhängig voneinandergleich oder verschieden sein kann und hydrolysierbare Reste bedeutet und

c 3 oder 4 ist,

sowie deren Teilhydrolysate.

Bei den Teilhydrolysaten kann es sich dabei um Teilhomohydrolysate handeln, d.h. Teilhydrolysate von einer Art von Organosiliciumverbindung der allgemeinen Formel (I), wie auch um Teilcohydrolysate, d.h. Teilhydrolysate von mindestens zwei verschiedenen Arten von Organosiliciumverbindungen der allgemeinen Formel (I). Diese erfindungsgemäßen Vernetzer bzw. Teilhydrolysate haben ein maximales Gewichtsmittel Mw von 1.200 g/mol.

Obwohl in Formel (I) nicht angegeben, können die erfindungsgemäß eingesetzten Organosiliciumverbindungen herstellungsbedingt einen geringen Anteil von Hydroxylgruppen, bevorzugt bis maximal 5 % aller Si-gebundenen Reste, aufweisen.

Handelt es sich bei den in den erfindungsgemäßen Massen eingesetzten Vernetzern (A) um Teilhydrolysate von Organosiliciumverbindungen der Formel (I), so sind solche mit bis zu 10 Siliciumatomen bevorzugt.

Bevorzugt handelt es sich bei Rest $R^2$ um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)-glykolresten substituiert sind, wobei letztere aus Oxyethylen- und/oder Oxypropyleneinheiten aufgebaut sind, besonders bevorzugt um Alkylreste mit 1 bis 12 Kohlenstoffatomen, insbesondere um den Methylrest. Es kann sich bei Rest $R^2$ aber auch um zweiwertige Reste handeln, die z.B. zwei Silylgruppen miteinander verbinden.

Beispiele für Reste $R^2$ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste $R^2$ sind Methoxyethyl-, Ethoxyethyl- und der Ethoxyethoxyethylrest.

Beispiele für zweiwertige Reste $R^2$ sind Polyisobutylendiylreste und propandiylterminierte Polypropylenglykolreste.

Für Rest $R^2$ sind Kohlenwasserstoffreste mit 1 bis 12 Kohlenstoffatomen bevorzugt und der Methyl- und der Vinylrest besonders bevorzugt.

Beispiele für Z alle bisher bekannten hydrolysierbaren Reste, wie z.B. über Sauerstoffatom oder Stickstoffatom an Siliciumatom gebundene, gegebenenfalls substituierte Kohlenwasserstoffreste.

Bevorzugt handelt es sich bei Rest Z um Rest -OR$^1$, wobei R$^1$ substituiere oder unsubstituierte Kohlenwasserstoffreste, die durch Sauerstoffatome unterbrochen sein können, bedeutet. Beispiele für Z sind Methoxy-, Ethoxy-, n-Propoxy-, i-Propoxy-, n-Butoxy-, i-Butoxy-, s-Butoxy-, tert-Butoxy- und 2-Methoxyethoxyrest, Aminoreste, wie Methylamino-, Dimethylamino-, Ethylamino-, Diethylamino- und Cyclohexylaminorest, Amidoreste, wie N-Methylacetamido- und Benzamidorest, Aminoxyreste, wie der Diethylaminoxyrest, Oximoreste, wie Dimethylketoximo-, Metylhethylketoximo- und Methylisobutylketoximorest, und Enoxyreste, wie der 2-Propenoxyrest sowie Acyloxyresten wie beispielsweise Acetylgruppen.

Bevorzugt handelt es sich bei den in den erfindungsgemäßen Massen eingesetzten Vernetzern (A) um Tetramethoxysilan, Tetraethoxysilan, Tetrapropoxysilan, Tetrabutoxysilan, Methyltrimethoxysilan, Methyltriethoxysilan, Vinyltrimethoxysilan, Vinyltriethoxysilan, Phenyltrimethoxysilan, Phenyltriethoxysilan, 1,2-Bis(trimethoxysilyl)ethan, 1,2-Bis(triethoxysilyl)ethan, sowie Teilhydrolysate der genannten Organosiliciumverbindungen, wie z.B. Hexaethoxydisiloxan.

Besonders bevorzugt handelt es sich bei den in den erfindungsgemäßen Massen eingesetzten Vernetzern (B) um Tetramethoxysilan, Tetraethoxysilan, Tetrapropoxysilan, Methyltrimethoxysilan, Methyltriethoxysilan, Vinyltrimethoxysilan, Vinyltriethoxysilan, Phenyltrimethoxysilan, 1,2-Bis(trimethoxysilyl)ethan, 1,2-Bis(triethoxysilyl)ethan, sowie deren Teilhydrolysate, insbesondere um Tetraethoxysilan, 1,2-Bis(triethoxysilyl)ethan, Vinyltriethoxysilan und deren Teil- und Mischhydrolysate.

Die in den erfindungsgemäßen Härterzusammensetzungen eingesetzten Vernetzer (A) sind handelsübliche Produkte bzw. können nach in der Siliciumchemie bekannten Verfahren hergestellt werden.

Die erfindungsgemäßen Vernetzer (A) werden in solchen Mengen eingesetzt, dass sich ein mindestens zweifach molarer Überschuss hydrolysierbare oder hydrolysierte Vernetzerfunktionen bezogen auf den Endgruppenanteil der zu vernetzenden Bestandteile ergibt. Vorzugsweise wird ein molares Verhältnis von Vernetzerfunktionen zu den zu vernetzenden Gruppen von 2:1 bis 10:1 eingestellt.

Als erfindungsgemäße Katalysatoren (B) eigenen sich prinzipiell alle bisher bekannten Katalysatoren für die Kondensationsreaktion wie beispielsweise Dialkylzinnverbindungen, Organotitanate oder Chelatkomplexe des Titans, des weiteren beispielsweise Cer-, Zirkonium-, Molybdän-, Mangan-, Kupfer- oder Zinkverbindungen oder deren Salze, Alkoxylate oder Chelatkomplexe, auch katalytisch aktive Verbindungen der Hauptgruppen oder Salze von Bismut, Li, Sr oder B.

Bevorzug sind als Katalysator (B) die Metallverbindungen von Cer, Zirkonium, Bismut, Lithium und Diorganozinn. Besonders bevorzugt werden die entsprechenden Carboxylate.

Die erfindungsgemäßen Härterzusammensetzungen enthalten Katalysator (B) in den für die Kondensationsreaktion üblichen Mengen. Im anwendungsfertigen 2K-System liegen diese bei Zinnverbindungen beispielsweise im Bereich von 100-500 ppm, bei Li-Verbindungen im Bereich von 100-1.000 ppm und bei Bismutverbindungen im Bereich von 2.000-5.000 ppm, jeweils bezogen auf das Metall.

Die Komponente (C) wird der Härterzusammensetzung zugegeben, um das Mischverhältnis der Härterzusammensetzung mit der Polymerzusammensetzung in einem RTV-2-System besser justieren zu können und die Mischbarkeit aller Bestandteile zu bewerkstelligen. Komponente (C) dient also der Volumenerhöhung der Härterzusammensetzung, was eine bessere Steuerung der Dosierung beim Mischen ermöglicht und stellt die Homogenität des Stoffgemisches sicher.

Als erfindungsgemäßes Extenderpolymer (C) werden Organosiliziumverbindungen eingesetzt, deren stoffliche Zusammensetzung der folgenden allgemeinen Formel (II)

$$(T+Q)/(M+D+T+Q) \geq 0,25 \qquad\qquad (II)$$

entspricht.

Die Nomenklatur der Formel (II) erfolgt entsprechend dem allgemeinen Wissensstand, wonach M-Einheiten monofunktionellen-, D-Einheiten difunktionellen-, T-Einheiten trifunktionellen- und Q-Einheiten tetrafunktionellen Siliziumatomen entsprechen. Verzweigte Extenderpolymere enthalten prozessbedingt beispielsweise Siliziumgebundene Hydroxylgruppen in Mengen von weniger 1 Gew.-% bezogen auf 100 Teile des verzweigten Polymers. Die erfindungsgemäße Komponente (C) enthält bevorzugt einen Rest-OH-Gehalt von kleiner als 0,5 Gew-%, besonders bevorzugt kleiner 0,2 Gew-%.

Bevorzugt beträgt die Summe der molaren Anteile von T- und Q-Einheiten im Träger- oder Extenderpolymers (C) mindestens 25% der Siliziumatome. Besonders bevorzugt mindestens 35% und insbesondere mindestens 40%.

Die Verwendung von (C) ergibt unerwartet gute Verträglichkeit und Kompatibilität auch mit polareren Komponenten.

Der Bereich der Mittleren Molmasse Mw ist für die erfindungsgemäße Komponente (C) besonders bevorzugt mehr als 1.200 g/mol bis 5.000 g/mol.

Die erfindungsgemäßen Härtezusammensetzungen können als weitere Komponente Haftvermittler (D) enthalten. Sie werden als funktionelle Silane oder Kupplungsagenzien betrachtet. Beispiele für die in den erfindungsgemäßen Massen eingesetzten Haftvermittler (D) sind Silane und Organopolysiloxane mit funktionellen Gruppen, wie beispielsweise solche mit Glycidoxy-, Amino- oder Methacryloxyresten. Des Weiteren können als Haftvermittler (D) auch Silane mit hydrolysierbaren Gruppen und SiC-gebundenen Vinyl-, Acryloxy-, Methacryloxy-, Epoxy-, Säureanhydrid-, Säure-, Ester-, cyanurato-, carbamato- oder ureidofunktionelle oder Ethergruppen sowie deren Teil- und Mischhydrolysate verwendet werden. Bevorzugt als Haftvermittler sind Amino-, acryl-, epoxy-, cyanurato-, carbamato- oder ureidofunktionelle Silane mit hydrolysierbaren Gruppen und deren Teilhydrolysate. Bevorzugt ist (D) in solchen Mengen enthalten, dass auf 100 Gewichtsteile der katalysierten, anwendungsfertigen RTV-2 Mischung (=Härtezusammensetzung + Polymerzusammensetzung) einen Anteil von vorzugsweise bis 50 Gewichtsteilen, besonders bevorzugt 0,1 bis 20 Gewichtsteilen, insbesondere 0,5 bis 10 Gewichtsteilen (D) enthält.

Die Härterzusammensetzung kann darüber hinaus weitere Bestandteile (E), die dem Fachmann seit langem bekannt sind, enthalten. Beispiele für (E), die bei den erfindungsgemäßen Zusammensetzungen verwendet werden können, sind Füllstoffe, wie verstärkende und nicht verstärkende Füllstoffe, Weichmacher, lösliche Farbstoffe, anorganische und organische Pigmente, Lösungsmittel, Fungicide, Duftstoffe, Dispergierhilfsmittel, rheologische Additive, Korrosionsinhibitoren, Oxidationsinhibitoren, Lichtschutzmittel Hitzestabilisatoren, flammabweisend machende Mittel und Mittel zur Beeinflussung der elektrischen Eigenschaften.

Die angegebenen Mengen an Haftvermittler (D) überschreiten je nach Art des Haftvermittlers die Löslichkeit in linearen Polydimethylsiloxan-Polymeren, was zwangsläufig zu einer Phasenseparation führt. Diese Separationsneigung wird durch den Einsatz von erfindungsgemäßem (C) unterbunden, ohne dass weitere rheologisch aktive Substanzen wie Kieselsäure, Russ oder andere Verdickungsadditive eingesetzt werden müssen. Auch ein zusätzliche Prozessschritt mit einer aufwändig chemisch Umzusetzung der Härterzusammensetzung ist nicht notwendig. Ein weiterer Vorteil der erfindugnsgemäßen Härtezusammensetzung ist, dass der Einsatz der erfindungsgemäßen Komponente (C) hilft, die anwendungsüblichen Dosierverhältnisse von Härterzusammensetzung und Polymerzusammensetzung einzustellen. Die Herstellung der Härterzusammensetzung kann beispielsweise durch Mischen der einzelnen Komponenten (A), (B) und (C) erfolgen.

Die weiteren Komponenten (D) und (E) werden bei Bedarf ebenfalls eingemischt.

Die erfindungsgemäße Härterzusammensetzung wird als eine Komponente in Kondensationsvernetzenden RTV-2-Siliconzusammensetzungen eingesetzt. Diese Kondensationsvernetzenden RTV-2-Siliconzusammensetzungen finden wiederum beispielsweise als Klebe- und Dichtstoff in diversen Applikationen ihre Anwendung.

**Beispiele**

Beispiele zur Herstellung von Härterkomponenten

Beispiel 1 (literaturanalog zu DE 32 06 474 A1: nicht erfindungsgemäß) gemäß Beispiel 1 der o.g. Schrift wurden zunächst 10,8 Teile Tetraethylsilikat mit 3,6 Teilen Dibutylzinndilaurat für 2h bei 140°C umgesetzt. Anschließend wurden 25,6 Teile Aminopropyltriethoxysilan zugegeben. Dies wurde mit 7 Teilen hydrophobierten Kieselsäure, 28 Teile Kreide und 25 Teilen vinylfunktionellem Polymer mit 20.000 mPas zu einer Härterkomponente compoundiert.

Beispiel 2 (literaturanalog zu WO 2010/057963 A1:nicht erfindungsgemäß) Gemäß der Beschreibung der o.g. Schrift wurde eine Härtermischung hergestellt, indem 20 Teile eines Vinylpolymers mit einer Viskosität von 20.000 mPas mit 32 Teilen Tetraethylsilikat und 10 Teilen Aminopropyltriethoxysilan als Haftvermittler vorgemischt wurden. Anschließend wurden 17 Teilen Kieselsäure (HDK H15) und 20 Teile Ruß (Ensaco MS) zugemischt und zu einer homogenen Masse verarbeitet

Beispiel 3 (erfindungsgemäß) 54 Teile einer Harzkomponente enthaltend 75% T- und 25% D-Einheiten mit einem Gewichtsmittel von 2.800 g/mol wurde mit 15 Teilen eines teilhydrolysierten Tetraethylsilikats TES40, 15 Teilen g-Aminopropyltriethoxysilan, 15 Teilen Wacker AMS70 sowie 1 Teil Dibutylzinndiacetat zu einer homogenen, klaren Mischung vermischt.

Beispiel 4 (erfindungsgemäß) 44 Teile einer Harzkomponente enthaltend 75% T- und 25% D-Einheiten mit einem Gewichtsmittel von 2.800 g/mol wurde mit 15 Teilen eines teilhydrolysierten Tetraethylsilikats TES40, 15 Teilen g-Aminopropyltriethoxysilan, 15 Teilen Wacker AMS70 und 10 Teilen Ruß (Ensaco MS) homogen vermischt, anschließend mit 1 Teil Dibutylzinndiacetat katalysiert

Beispiel 5: (nicht erfindungsgemäß) 54 Teile einer Harzkomponente enthaltend 20% T- 70% D- und 10% M-Einheiten mit einem Gewichtsmittel von 2.000 g/mol wurde mit 15 Teilen eines teilhydrolysierten Tetraethylsilikats TES40, 15 Teilen g-Aminopropyltriethoxysilan, 15 Teilen Wacker AMS70 homogen vermischt, anschließend mit 1 Teil Dibutylzinndiacetat katalysiert

Beispiel 6: (erfindungsgemäß) 54 Teile einer Harzkomponente enthaltend 100% T- Einheiten mit einem Gewichtsmittel von 2.500 g/mol wurde mit 15 Teilen eines teilhydrolysierten Tetraethylsilikats TES40, 15 Teilen g-Aminopropyltriethoxysilan, 15 Teilen Wacker AMS70 homogen vermischt, anschließend mit 1 Teil Dibutylzinndiacetat katalysiert

Beispiel 7: (erfindungsgemäß) 54 Teile einer Harzkomponente enthaltend 40% Q- und 60% M-Einheiten mit einem Gewichtsmittel von 1.500 g/mol wurde mit 15 Teilen eines teilhydrolysierten Tetraethylsilikats TES40, 15 Teilen g-Aminopropyltriethoxysilan, 15 Teilen Wacker AMS70 homogen vermischt, anschließend mit 1 Teil Dibutylzinndiacetat katalysiert

Beispiel 8: (erfindungsgemäß) 54 Teile einer Harzkomponente enthaltend 10%Q-, 15% T- sowie 65% D- sowie 10% M-Einheiten mit einem Gewichtsmittel von 2.200 g/mol wurden mit 15 Teilen eines teilhydrolysierten Tetraethylsilikats TES40, 15 Teilen g-Aminopropyltriethoxysilan, 15 Teilen Wacker AMS70 homogen vermischt, anschließend mit 1 Teil Dibutylzinndiacetat katalysiert.

Die Beurteilung der Separation der Bespiele erfolgt nach 3 Monaten bei Standardbedingungen (bei Raumtemperatur ca. 25°C und Normaldruck ca. 1015 mPa) beziehungsweise nach 4 Wochen bei erhöhten Temperaturen (50°C) und Normaldruck und ist in Tabelle 1 wiedergegeben.

Verwendete Abkürzungen in Tabelle 1:

S = standfeste Paste
F = flüssig

Tabelle 1

| Beispiel | 1 | 2 | 3* | 4* | 5 | 6* | 7* | 8* |
|---|---|---|---|---|---|---|---|---|
| | | | | | | | | |
| Konsistenz | S | S | F | S | F | F | F | F |
| Separation der Härtermischung nach 4 Wochen bei 50°C | ja ** | ja | nein | nein | ja | nein | nein | nein |
| Separation der Härtermischung nach 3 Monaten bei Standard-bedingungen | ja ** | ja | nein | nein | ja | nein | nein | nein |
| Vulkanisation mit EL RT 774 nach 72h | gut | gut | gut | gut | gut | gut | gut | gut |
| * erfindungsgemäß<br>** siehe DE 32 06 474 A1 Seite 37, vorletzter Absatz | | | | | | | | |

Bei den erfindungsgemäßen Beispielen bildet sich in dieser Zeit keine erkennbare Inhomogenität der Härterkomponente aus.

Das nicht erfindungsgemäße Beispiel 1 enthält ein Umsetzungsprodukt aus Vernetzer und Katalysator, um die Verträglichkeit von Katalysator, Härter und Haftvermittler mit den anderen Komponenten ohne Einsatz von Lösungsmitteln herzustellen. Trotzdem werden Ölseparationen beobachtet.

Auch das nicht erfindungsgemäße Beispiel 2 zeigt eine Separation der Mischung in Form von Ölaustritt an die Oberfläche.

Die erfindungsgemäßen Beispiele 3, 4, 6, 7 und 8 mit einem Anteil von T- oder Q-Einheiten von mindestens 25% zeigen keinen Ölaustritt. Die Härterzubereitungen 3, 5, 6, 7 und 8 sind klare bis leicht trübe Flüssigkeiten. Wobei das nicht erfindungsgemäße Beispiel 5 eine Phasenseparation zeigt.

**Patentansprüche**

1. Kondensationsvernetzende RTV-2-Siliconzusammensetzungen **dadurch gekennzeichnet, dass** eine der beiden Komponenten eine Härterzusammensetzung ist enthaltend

    (A) Mindestens einen Vernetzer,
    (B) Mindestens einen Katalysator ausgewählt aus der Gruppe be-stehend aus Carboxylaten von Cer, Zirkonium, Bismut, Lithium, und Zinn,
    (C) mindestens ein Extenderpolymer der allgemeine Formel (II)

    $$(T+Q)/(M+D+T+Q) \geq 0,25 \qquad\qquad (II)$$

    wobei M-Einheiten monofunktionellen Siliziumatomen, D-Einheiten difunktionellen Siliziumatomen, T-Einheiten trifunktionellen Siliziumatomen und Q-Einheiten tetrafunktionellen Siliziumatomen entsprechen,

    **dadurch gekennzeichnet, dass** die Summe der molaren Anteile von T- und Q-Einheiten in (C) mindestens 25% beträgt.

2. Herstellung der Härterzusammensetzung gemäß Anspruch 1 durch Mischen der Komponenten (A), (B) und (C).

3. Verwendung der Kondensationsvernetzenden RTV-2-Siliconzusammensetzungen gemäß Anspruch 1 als Klebe- und Dichtstoff.

**Claims**

1. Condensation-crosslinking RTV-2 silicone compositions, **characterized in that** one of the two components is a hardener composition comprising

(A) at least one crosslinker,
(B) at least one catalyst selected from the group consisting of carboxylates of cerium, zirconium, bismuth, lithium, and tin,
(C) at least one extender polymer of the general formula (II)

$$(T+Q)/(M+D+T+Q) \geq 0.25 \qquad (II)$$

where M units correspond to monofunctional silicon atoms, D units correspond to bifunctional silicon atoms, T units correspond to trifunctional silicon atoms and Q units correspond to tetrafunctional silicon atoms,

**characterized in that** the sum of the molar proportions of T and Q units in (C) is at least 25%.

2. Production of the hardener composition according to Claim 1 by mixing the components (A), (B) and (C).

3. Use of the condensation-crosslinking RTV-2 silicone compositions according to Claim 1 as adhesive and sealant.


**Revendications**

1. Compositions de silicone RTV-2 réticulant par condensation, **caractérisées en ce qu'**un des deux composants est une composition de durcisseur contenant

(A) au moins un agent de réticulation,
(B) au moins un catalyseur choisi dans le groupe constitué par les carboxylates de cérium, de zirconium, de bismuth, de lithium et d'étain,
(C) au moins un polymère extendeur de formule générale (II)

$$(T+Q)/(M+D+T+Q) \geq 0,25 \qquad (II)$$

les unités M correspondant à des atomes de silicium monofonctionnels, les unités D à des atomes de silicium bifonctionnels, les unités T à des atomes de silicium trifonctionnels et les unités Q à des atomes de silicium tétrafonctionnels,

**caractérisées en ce que** la somme des proportions molaires des unités T et Q dans (C) est d'au moins 25 %.

2. Fabrication de la composition de durcisseur selon la revendication 1, par mélange des composants (A), (B) et (C).

3. Utilisation des compositions de silicone RTV-2 réticulant par condensation selon la revendication 1 en tant qu'adhésif et agent d'étanchéité.

**IN DER BESCHREIBUNG AUFGEFÜHRTE DOKUMENTE**

**In der Beschreibung aufgeführte Patentdokumente**

- WO 2010057963 A1
- US 2010081751 A1

- DE 3206474 A1